# EUROPEAN PATENT SPECIFICATION

(11) **EP 3 741 490 B1**
(45) Date of publication and mention of the grant of the patent: **26.02.2025**
(21) Application number: 19760688.2
(22) Date of filing: 25.02.2019
(51) Int. Cl.: B22F 10/80, B23K 9/173, B23K 15/00, B23K 26/00, B23K 26/08, B23K 26/342, B23K 103/04, B23P 15/00, B33Y 10/00, B33Y 30/00, B33Y 50/02, G06F 113/26, G06F 30/20, B23K 9/23, B23K 9/04, B22F 10/22

(54) **METHOD FOR SHAPING LAMINATED SHAPED PRODUCT, DEVICE FOR MANUFACTURING LAMINATED SHAPED PRODUCT, AND PROGRAM**
VERFAHREN ZUM FORMEN EINES LAMINIERTEN FORMKÖRPERS, VORRICHTUNG ZUR HERSTELLUNG EINES LAMINIERTEN FORMKÖRPERS UND PROGRAMM
PROCÉDÉ DE MISE EN FORME D'UN PRODUIT MIS EN FORME STRATIFIÉ, DISPOSITIF POUR FABRIQUER UN PRODUIT MIS EN FORME STRATIFIÉ, ET PROGRAMME

(30) Priority: 27.02.2018 JP 2018033877
(43) Date of publication of application: 25.11.2020
(73) Proprietor: Kabushiki Kaisha Kobe Seiko Sho (Kobe Steel, Ltd.), Kobe-shi, Hyogo 651-8585 (JP)
(72) Inventor: YAMASAKI, Takemasa, Nishi-ku, Kobe-shi, Hyogo 651-2271 (JP); FUJII, Tatsuya, Nishi-ku, Kobe-shi, Hyogo 651-2271 (JP); SATO, Shinji, Nishi-ku, Kobe-shi, Hyogo 651-2271 (JP); YAMADA, Takeshi, Nishi-ku, Kobe-shi, Hyogo 651-2271 (JP)
(74) Representative: Müller-Boré & Partner Patentanwälte PartG mbB
(86) International application number: PCT/JP2019/007152
(87) International publication number: WO 2019/167904

(56) References cited:
- JP-A- 2001 282 768
- JP-A- 2001 282 768
- JP-A- 2007 076 037
- JP-A- 2007 076 037
- JP-A- 2014 203 366
- JP-A- H07 234 888
- US-A1- 2008 169 587
- US-A1- 2017 144 242
- DONGHONG DING ET AL: "A tool-path generation strategy for wire and arc additive manufacturing", THE INTERNATIONAL JOURNAL OF ADVANCED MANUFACTURING TECHNOLOGY, vol. 73, no. 1-4, 11 April 2014 (2014-04-11), London, pages 173 - 183, XP055472255, ISSN: 0268-3768, DOI: 10.1007/s00170-014-5808-5

## Description

### TECHNICAL FIELD

The present invention relates to a method for depositing an additively-manufactured object, an apparatus for manufacturing the additively-manufactured object, and a program.

### BACKGROUND ART

In recent years, there is a growing need for depositing using a 3D printer as production means. Researches and developments have been made toward practical applications of depositing using a metal material. A 3D printer for depositing a metal material produces an additively-manufactured object by melting a metal powder or a metal wire by use of a heat source such as a laser, an electron beam, and an arc, and depositing the molten metal.

In the case of using an arc, a filler metal is melted by the arc, and then solidified to form a bead, and the bead is deposited into a plurality of layers, thereby producing an additively-manufactured object. In this case, the procedure of depositing the bead is determined, using three-dimensional model data indicating the shape of the additively-manufactured object, by an appropriate deposition plan in accordance with the shape.

For example, Patent Literature 1 discloses a technique for producing an additively-manufactured object using three-dimensional model data as described above. In Patent Literature 1, three-dimensional model data are divided into a large number of polygons, and the polygons are classified based on the direction of a polygon face, thereby dividing the shape of the additively-manufactured object into a plurality of parts.

Patent Literature 2 describes an algorithm to automatically generate optimal tool-paths for the wire and arc additive manufacturing (WAAM) process for a large class of geometries including decomposing 2D geometries into a set of convey polygons and generation a continuous tool-path using a combination of zigzag and contour pattern strategies.

### CITATION LIST

### PATENT LITERATURE

Patent Literature 1: JP-A-2007-76037
Patent Literature 2: DONGHONG DING ET AL: "A tool-path generation strategy for wire and arc additive manufacturing", THE INTERNATIONAL JOURNAL OF ADVANCED MANUFACTURING TECHNOLOGY, vol. 73, no. 1-4, 11 April 2014 (2014-04-11), pages 173-183, XP055472255, London, ISSN: 0268-3768. DOI: 10.1007/s00170-014-5808-5)

### SUMMARY OF INVENTION

### TECHNICAL PROBLEM

In the invention disclosed in Patent Literature 1, portions to which the cutting process and the additive manufacturing are to be applied and the process sequence are automatically determined in an apparatus for performing a cutting process and additive manufacturing. However, the apparatus does not determine whether the workpiece has a shape to which continuous additive manufacturing can be applied, or not.

Actually, a depositing process that is to be performed in the optimum procedure in accordance with the shape of the workpiece often depends on the experience and intuition of the worker, and the work requires skill. Therefore, it is requested to develop a technique in which additive manufacturing can be performed at a high efficiency in accordance with the shape of the workpiece.

The invention has been developed in view of the above-described circumstances. It is an object of the invention to provide a method for depositing an additively-manufactured object and apparatus for manufacturing the additively-manufactured object in which, when the additively-manufactured object is to be built by depositing beads, a bead map contributing to determination of a depositing procedure for forming beads is produced from three-dimensional model data of the additively-manufactured object, and this enables depositing to be performed while the depositing procedure is efficiently and automatically determined, and a program for causing a computer to execute the determination of a bead depositing sequence of the additive manufacturing.

### SOLUTION TO PROBLEM

The claimed invention is defined by the subject-matter of the independent claims. Additional embodiments are defined by the dependent claims.

The present invention includes following configurations.
(1) A method for depositing an additively-manufactured object in which, using three-dimensional shape data indicating a shape of the additively-manufactured object, the additively-manufactured object is formed by beads obtained by melting and solidifying a filler metal, the method including:
   dividing the shape of the additively-manufactured object of the three-dimensional shape data, into a plurality of polygon faces;
   extracting a column of the plurality of polygon faces along a predetermined specific direction, and sequentially providing index numbers along the specific direction, starting from a start polygon face at one end of the extracted column;
   detecting a terminal polygon face at another end of the column based on directions of a pair of adjacent polygon faces in the column;
   providing, among a plurality of polygon faces ranging from the start polygon face to the terminal polygon face in the column, a bead formation ON flag to polygon faces other than the terminal polygon face, and a bead formation OFF flag to the terminal polygon face;
   producing a bead map of all polygon faces in which the index numbers and the flags provided to the polygon faces are associated with one another;
   referring to the bead map to obtain, for all of the columns, a bead continuous formation pass in a case where bead formation in which a bead is continuously formed along the specific direction for each of the columns is executed at positions corresponding to the polygon faces having the bead formation ON flag, and stopped at a position where the bead formation reaches the polygon face having the bead formation OFF flag from the bead formation ON flag; and
   continuously forming, sequentially from one of the plurality of columns, the bead along the bead continuous formation pass obtained for the column, thereby depositing the additively-manufactured object.
(2) An apparatus for manufacturing an additively-manufactured object, including:
   a control unit configured to obtain the bead continuous formation pass for each of the columns, by the method for depositing an additively-manufactured object according to (1); and
   a building unit configured to continuously form, starting sequentially from one of the plurality of columns, the bead along the bead continuous formation pass of the column.
(3) A program for causing a computer to execute a determination of a bead depositing sequence when an additively-manufactured object is formed using three-dimensional shape data indicating a shape of the additively-manufactured object, by beads obtained by melting and solidifying a filler metal, in which the program causes the computer to execute procedures of:
   dividing the shape of the additively-manufactured object of the three-dimensional shape data, into a plurality of polygon faces;
   extracting a column of the plurality of polygon faces along a predetermined specific direction, and sequentially providing index numbers along the specific direction, starting from a start polygon face at one end of the extracted column;
   detecting a terminal polygon face at another end of the column based on directions of a pair of adjacent polygon faces in the column;
   providing, among a plurality of polygon faces ranging from the start polygon face to the terminal polygon face in the column, a bead formation ON flag to polygon faces other than the terminal polygon face, and a bead formation OFF flag to the terminal polygon face;
   producing a bead map of all polygon faces in which the index numbers and the flags provided to the polygon faces are associated with one another;
   referring to the bead map to obtain, for all of the columns, a bead continuous formation pass in a case where bead formation in which a bead is continuously formed along the specific direction for each of the columns is executed at positions corresponding to the polygon faces having the bead formation ON flag, and stopped at a position where the bead formation reaches the polygon face having the bead formation OFF flag from the bead formation ON flag; and
   continuously forming, sequentially from one of the plurality of columns, the bead along the bead continuous formation pass obtained for the column, thereby depositing the additively-manufactured object.

### ADVANTAGEOUS EFFECTS OF INVENTION

According to the invention, when an additively-manufactured object is to be built by depositing beads, a bead map contributing to determination of a depositing procedure for forming beads is produced from three-dimensional model data of the additively-manufactured object, and this enables depositing of the additively-manufactured object to be performed while the procedure for additive manufacturing is efficiently and automatically determined.

### BRIEF DESCRIPTION OF DRAWINGS

FIG. 1 is a schematic configuration view of a manufacturing apparatus for manufacturing an additively-manufactured object of the invention.
FIG. 2 is a perspective view of the additively-manufactured object.
FIG. 3 is a flowchart showing a procedure from deposition designing of the additively-manufactured object until production of a program for depositing the additively-manufactured object under the designed conditions.
FIG. 4 is an explanatory view showing a manner of determining a blank region in a section of the additively-manufactured object.
FIG. 5 is an explanatory view showing a result of dividing the outer shape of the additively-manufactured object into a blank region and an additive manufacturing region.
FIG. 6 is a front view of a part of the additively-manufactured object.
FIG. 7 is a sectional view of portion Al along line VII-VII indicated in FIG. 6.
FIG. 8 is a step explanatory view schematically showing a manner of forming beads.
FIG. 9 is a step explanatory view schematically showing torch movement lines extending along the welding direction that is the reference direction, and the bead forming range when one virtual bead layer is formed in the additive manufacturing region.
FIG. 10 is an explanatory view showing a manner of dividing the shape of the additively-manufactured object from three-dimensional model data of the additively-manufactured object, into a plurality of polygon faces.
FIG. 11 is a flowchart showing a procedure of dividing three-dimensional model data into a plurality of polygon faces, and detecting a terminal face in which the bead formation is terminated after bead formation is started, from the polygon faces.
FIG. 12A and FIG. 12B are explanatory diagrams showing normal directions of polygon faces.
FIG. 13 is a flowchart showing a procedure of producing a bead map.
FIG. 14 is an explanatory diagram showing faces where an off flag is registered, in polygon faces.

### DESCRIPTION OF EMBODIMENTS

Hereinafter, an embodiment of the invention will be described in detail with reference to the drawings.

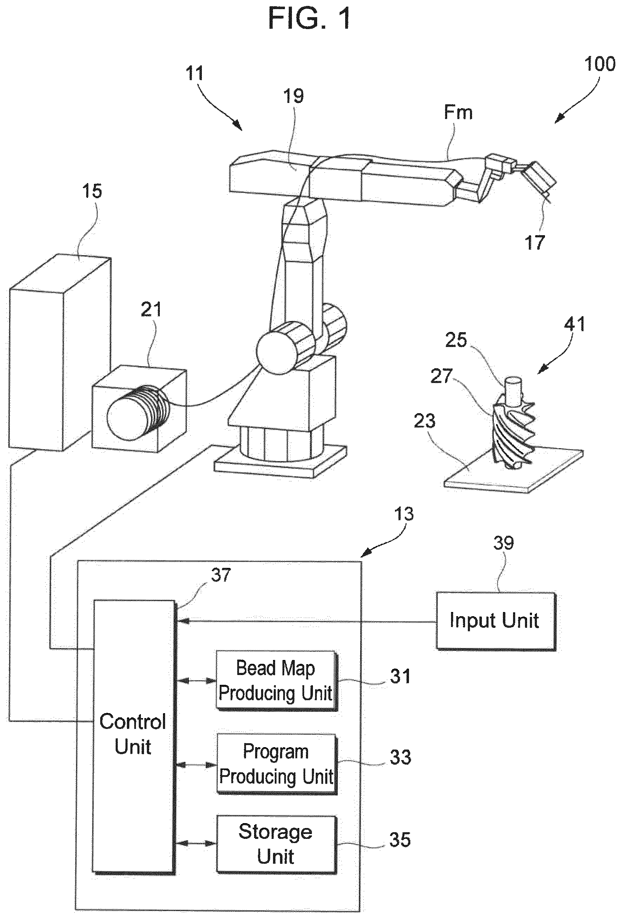

FIG. 1 is a schematic configuration view of a manufacturing apparatus for manufacturing an additively-manufactured object of the invention.

The apparatus 100 for manufacturing an additively-manufactured object of this configuration includes a building unit 11, a building controller 13 for collectively controlling the building unit 11, and a power supply device 15.

The building unit 11 includes a welding robot 19 having a torch 17 provided on the tip shaft and serving as a torch moving mechanism, and a filler metal feeding unit 21 for feeding a filler metal (welding wire) Fm to the torch 17.

The welding robot 19 is an articulated robot which has, for example, degrees of freedom on 6 axes, and, the filler metal Fm is supported in the torch 17 attached to the tip shaft of a robot arm, so that the filler metal can be continuously fed. The position and posture of the torch 17 can be set three-dimensionally desirably within the range of the degree of freedom of the robot arm.

The torch 17 generates an arc from the tip of the filler metal Fm in a shielding gas atmosphere while holding the filler metal Fm. The torch 17 includes a not-shown shield nozzle, and a shielding gas is to be supplied from the shield nozzle. The arc welding method may be either a consumable electrode type such as shielded metal arc welding or carbon dioxide gas arc welding, or a non-consumable electrode type such as TIG welding or plasma arc welding. The arc welding method is appropriately selected depending on the additively-manufactured object to be manufactured. For example, in the case of the consumable electrode type, a contact tip is disposed inside the shield nozzle, and the filler metal Fm to which a melting current is to be supplied is held on the contact tip.

Any commercially available welding wire can be used as the filler metal Fm. For example, wires provided as MAG welding and MIG welding solid wires (JIS Z 3312) for mild steel, high tensile steel, and cryogenic steel, and arc welding flux cored wires (JIS Z 3313) for mild steel, high tensile steel, and cryogenic steel can be used.

The filler metal Fm is fed from the filler metal feeding unit 21 to the torch 17 by a not-shown feeding mechanism attached to the robot arm or the like. In accordance with instructions from the building controller 13, the welding robot 19 causes the filler metal Fm that is continuously fed, to be melted and solidified while moving the torch 17. As a result, a bead that is a melt-solidified body of the filler metal Fm is formed. Here, the case where blades 27 formed by beads are to be formed on a shaft body 25 supported by a base member 23, as described in detail later will be exemplarily described.

The heat source for melting the filler metal Fm is not limited to the aforementioned arc. A heat source using another system such as a heating system using an arc and a laser together, a heating system using a plasma, or a heating system using an electron beam or a laser may be employed. In the case where an arc is used, beads can be easily formed while ensuring the shielding property, regardless of the material and the structure. In the case of heating by an electron beam or a laser, a heating amount can be controlled more finely to keep each weld bead in a more proper state, and this can contribute to further improvement of the quality of the additively-manufactured object.

The building controller 13 has a bead map producing unit 31, a program producing unit 33, a storage unit 35, and a control unit 37 to which these units are connected. Three-dimensional model data (such as CAD data) of the additively-manufactured object to be manufactured, and various sets of instruction information are input to the control unit 37 from an input unit 39.

Although described in detail later, the bead map producing unit 31 produces a bead map including position information for forming beads, using the input three-dimensional model data of an additively-manufactured object. The produced bead map is stored in the storage unit 35.

Using the above-described bead map, the program producing unit 33 produces a program for determining a procedure of depositing an additively-manufactured object by driving the building unit 11, and causing a computer to execute the procedure. The produced program is stored in the storage unit 35.

Also specification information such as various drivers and movable ranges that are provided in the building unit 11 is stored in the storage unit 35. The information is appropriately referred when a program is to be produced by the program producing unit 33, or when the program is to be executed. The storage unit 35 is configured by a storage medium such as a memory or a hard disk, to and from which various kinds of information can be input and output.

The building controller 13 including the control unit 37 is a computer unit provided with a CPU, a memory, an I/O interface, and so on. The controller has a function of reading data or program stored in the storage unit 35, and processing the data or executing the program, and a function of driving and controlling each portion of the building unit 11. The control unit 37 reads a program in the storage unit 35 and executes the program in accordance with instructions issued by an operation on the input unit 39, communication, and so on.

When the control unit 37 executes a program, the welding robot 19, the power supply device 15, and so on are driven in accordance with the programed predetermined procedure. In response to instructions from the building controller 13, the welding robot 19 moves the torch 17 along a programmed track or locus, and causes the filler metal Fm to be melt by an arc at a predetermined timing, thereby forming a bead at a desired position.

The bead map producing unit 31 and the program producing unit 33 are disposed in the building controller 13. However, the invention is not limited to this configuration. Although not shown, separately from the apparatus 100 for manufacturing an additively-manufactured object, for example, the bead map producing unit 31 and the program producing unit 33 may be disposed in an external computer such as a server or a terminal device that is remotely placed via communicating means such as a network, or a storage medium. In the case where the bead map producing unit 31 and the program producing unit 33 are connected to the external computer, a bead map and a program can be produced without requiring the apparatus 100 for manufacturing the additively-manufactured object, and the program producing work does not become complicated. In the case where the produced bead map and program are transferred to the storage unit 35 of the building controller 13, the apparatus can be operated in a similar manner as the case where they are produced by the building controller 13.

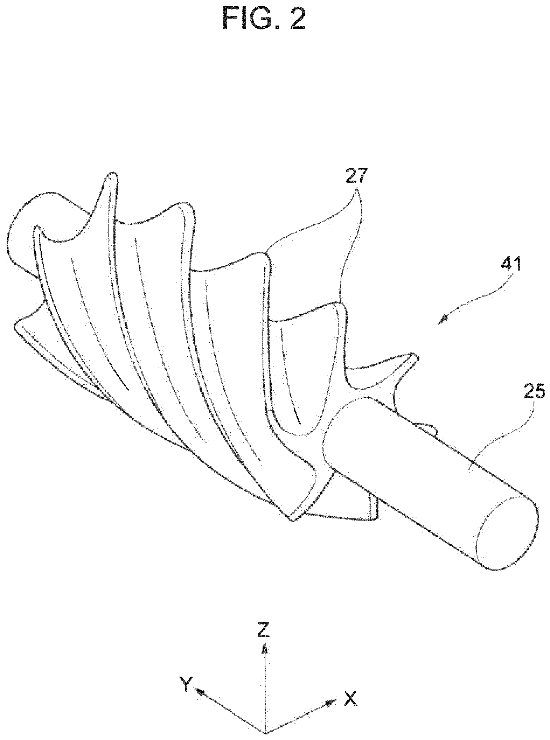

FIG. 2 is a perspective view of an additively-manufactured object 41.

The exemplified additively-manufactured object 41 includes the columnar shaft body 25, and a plurality (six in the illustrated example) of spiral blades 27 protruding radially outward on the outer circumference of the shaft body 25. The blades 27 have a screw shape in which the blades are disposed circumferentially at regular intervals in an intermediate portion in the axial direction of the shaft body 25.

In the apparatus 100 for manufacturing an additively-manufactured object shown in FIG. 1, when the additively-manufactured object 41 is deposited, the whole shape may not be formed by an additive manufacturing method, but the shaft body 25 may be formed using a blank such as a bar, and the blades 27 may be formed by the additive manufacturing method. In this case, the shaft body 25 of the additively-manufactured object 41 is formed by the blank, and the blades 27 that are to be formed on the outer circumference of the shaft body 25 is additive manufactured by beads. Therefore, the man-hours in building the additively-manufactured object 41 can be largely reduced.

Next, a basic deposition procedure for the additively-manufactured object that has been exemplified above will be described.

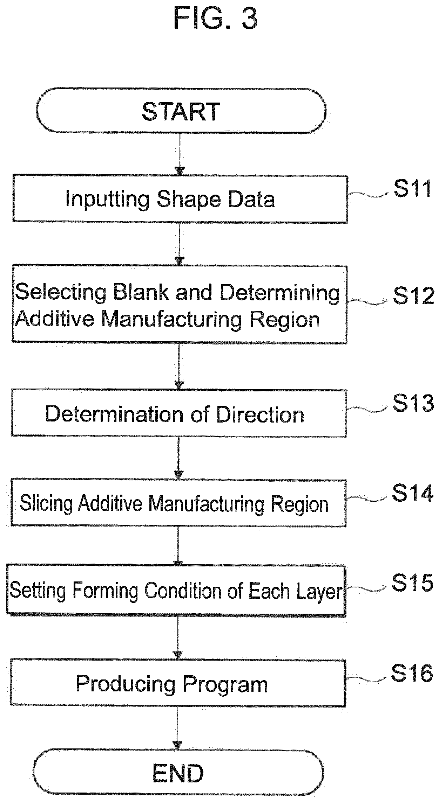

FIG. 3 is a flowchart showing a procedure of determining a bead depositing sequence when the additively-manufactured object 41 is deposition-designed, and the additively-manufactured object 41 is deposited under the designed conditions.

First, three-dimensional model data (hereinafter, referred to as shape data) indicating the shape of the additively-manufactured object 41 are input from the input unit 39 shown in FIG. 1 to the control unit 37 (S1 1). The shape data include the coordinates of the outer surface of the additively-manufactured object 41, dimensional information such as the diameter, shaft length, etc. of the shaft body 25, and information, which is referred as required, about kinds of materials to be referred, final finishing, and so on. The following steps of producing a program are performed by the program producing unit 33.

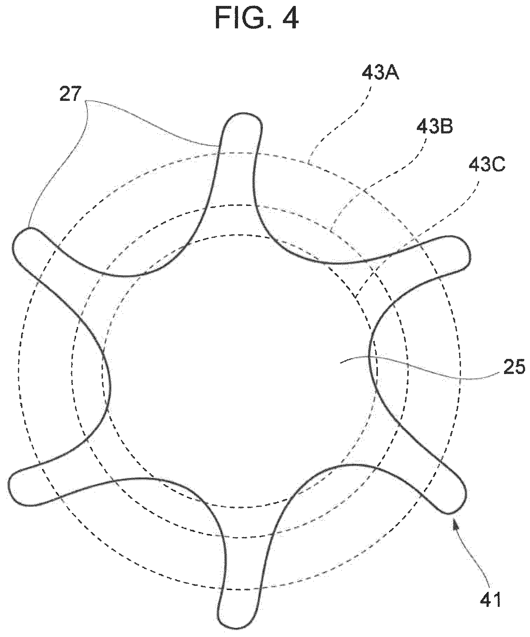

FIG. 4 is an explanatory view showing a manner of determining a blank region in a section of the additively-manufactured object 41.

The additively-manufactured object 41 has a columnar or cylindrical shaft body 25, and the plurality of blades 27 are provided to stand on the outer circumferential surface of the shaft body 25. Using input shape data, therefore, the outer shape of the additively-manufactured object 41 is divided into a blank region serving as a base body of the additively-manufactured object 41, and an additive manufacturing region serving as the outer shape of the additively-manufactured object 41 to be formed on the base body.

The blank region and the additive manufacturing region are determined in accordance with the shape data of the additively-manufactured object 41, and the kinds of available blanks. In the case of the illustrated additively-manufactured object 41, among blanks (round bars) 43A, 43B, and 43C illustrated as examples, the blank 43C having a diameter which can minimize the cutting amount in adjustment to obtain the shape of the additively-manufactured object 41 is selected.

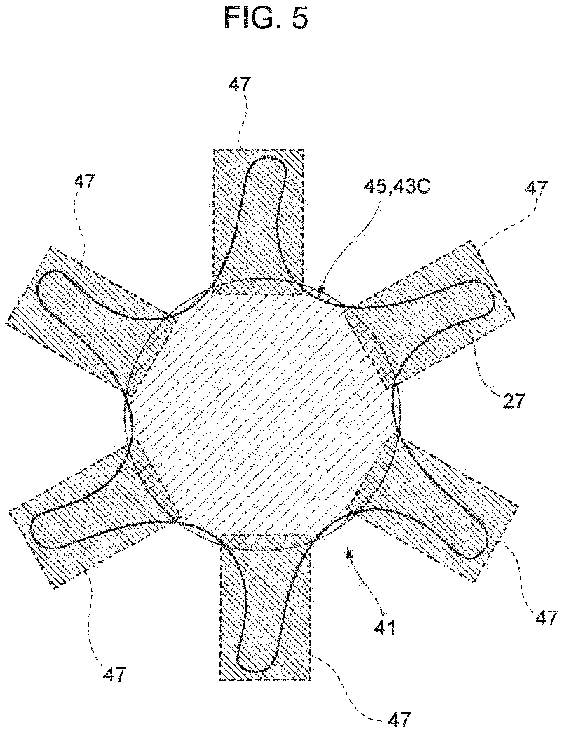

FIG. 5 is an explanatory view showing a result of dividing the outer shape of the additively-manufactured object 41 into a blank region 45 and an additive manufacturing region 47.

In this example, the blank 43C serves as the blank region 45, and each of the plurality of blades 27 that are placed on the outer circumference of the blank 43C serves as the additive manufacturing region 47 (S12).

Next, a procedure for forming beads in the additive manufacturing region 47 determined in S12 above will be determined.

In the additive manufacturing region 47, a rough shape of the blades 27 is built by sequentially depositing a plurality of beads. In each of the beads constituting the additive manufacturing region 47, the bead size including the bead width, bead height, etc. is controlled by changing welding conditions such as a moving speed of the torch 17 (see FIG. 1), that is, a continuous formation speed of the bead, a heat input to a filler metal or a welding portion, such as a welding current, a welding voltage, an applied pulse, etc. from the power supply device 15, and so on. The bead size is preferably managed on a section perpendicular to the moving direction of the torch for forming weld beads.

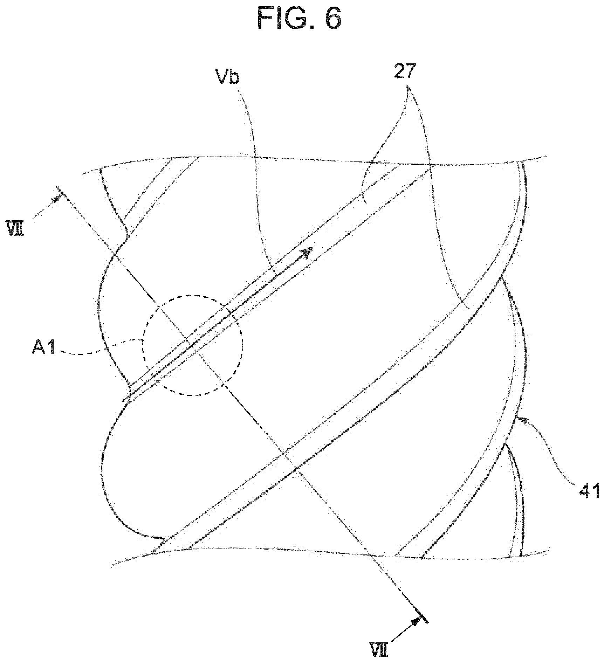

FIG. 6 is a front view of a part of the additively-manufactured object 41.

In the additively-manufactured object 41 of this configuration, in the case where the extending direction of the spiral blades 27 is made coincident with the bead forming direction Vb, the continuous formation length of each weld bead can be increased. Therefore, the bead forming direction Vb is made coincident with the extending direction of the blades 27, and this direction is set as the reference direction (S13). Accordingly, the bead size is controlled with reference to the shape of a bead section taken along line VII-VII perpendicular to the reference direction (bead forming direction Vb).

In the case of an additively-manufactured object having at least one protrusion portion that is continuous in a specific direction, for example, forming weld beads along the specific continuous direction leads to efficient depositing and reduction of complication of the additively manufacturing step. Therefore, first, a continuous specific direction of the additively-manufactured object is obtained from the shape data of an additively-manufactured object to be manufactured. The specific direction may be determined by arithmetic operation of a computer analyzing the shape data based on an appropriate algorithm, or may be determined artificially, for example by a judge of the worker.

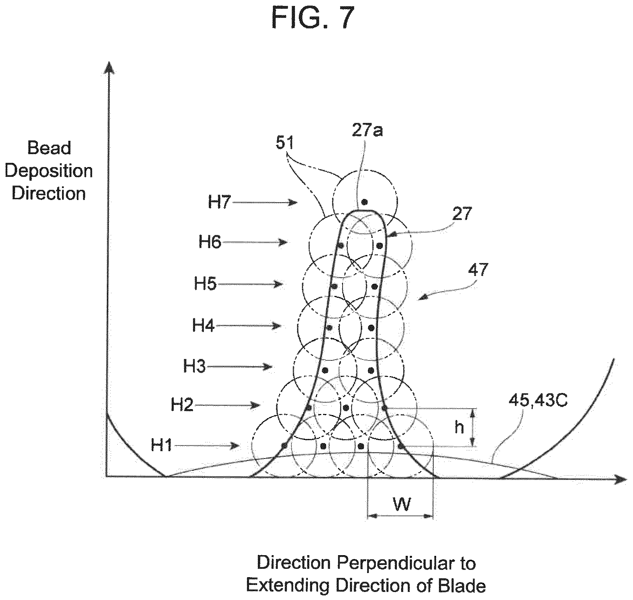

FIG. 7 is a sectional view of portion A1 indicated in FIG. 6, and taken along line VII-VII. The abscissa in the figure indicates the direction perpendicular to the extending direction (reference direction) of the blade 27, and the ordinate indicates the bead deposition direction that is the radial direction of the shaft body 25.

Here, the additive manufacturing region 47 of the blade 27 is sliced into a plurality of virtual bead layers (S14). Beads (illustrated as virtual beads 51) of the plurality of virtual bead layers are placed in accordance with the bead height h of one of the virtual bead layers so that the final shape of the blade 27 is included. The illustrated example shows a case where the virtual beads 51 shown by the broken lines are deposited sequentially (layers H1, H2, ...) starting from the surface of the shaft body 25 (blank 43C), and a radially outermost edge portion 27a of the blade 27 is covered in the seventh layer (layer H7). That is, here is a deposition model including a total of seven virtual bead layers.

Such a deposition model is produced for all of the plurality of additive manufacturing regions 47 shown in FIG. 5. In each of the deposition models, the bead size is designed using a common cross section. That is, various conditions such as positions (bead layer height h), etc. where the virtual beads 51 are placed, and the bead size (bead width W, etc.) in each virtual bead layer of the additive manufacturing region 47, welding conditions, and the like are set (S15). Although, in FIG. 7, division into seven virtual bead layers is performed, the number of divided layers may be arbitrarily set depending on the bead size, the dimensions and shape of the additively-manufactured object, etc.

Next, a program indicating a procedure for forming beads on the blank 43C in accordance with the deposition model designed as described above is produced (S16). The program is produced by the program producing unit 33 shown in FIG. 1.

The program mentioned here includes instruction codes for making the building unit 11 execute a procedure for forming beads that are designed by predetermined arithmetic operation based on the input shape data of the additively-manufactured object. The control unit 37 specifies a desired one of previously prepared programs, and executes the specified program, thereby causing the building unit 11 to produce the additively-manufactured object 41. That is, the control unit 37 reads a desired program from the storage unit 35, and forms beads in accordance with instruction codes of the program, thereby depositing the additively-manufactured object 41.

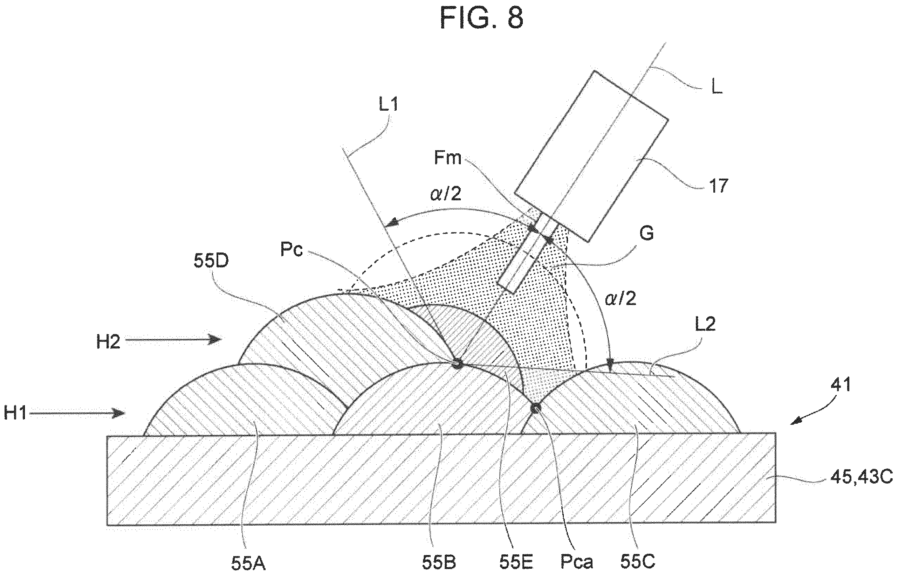

FIG. 8 is a step explanatory diagram schematically showing a manner of forming beads.

The building controller 13 (see FIG. 1) drives the building unit 11 in accordance with the produced program to sequentially juxtapose beads 55A, 55B, 55C, ... on the blank 43C of the additively-manufactured object 41, thereby forming a bead layer of a first layer (layer H1). Then, beads 55D, 55E, ... of a second layer (layer H2) are sequentially juxtaposed on the bead layer of the first layer (layer H1).

Here, the boundary between the outer surface of the bead 55D and the outer surface of the bead 55B is indicated by Pc (the boundary on the right side of the bead 55D in the figure), a tangent to the outer surface of the bead 55D in the boundary Pc is indicated by L1, and a tangent to the outer surface of the bead 55B in the boundary Pc is indicated by L2. In addition, the angle between the tangents L1 and L2 is indicated by α, and a bisector of the angle α is indicated by N.

The next bead 55E adjacent to the bead 55D is formed using the boundary Pc as a target position. When the bead 55E is formed, the direction of the torch axis of the torch 17 is set to a direction that is substantially identical with the direction of a straight line L. The target position where the bead 55E is to be formed is not limited to the boundary Pc, but may be set to the boundary Pea between the bead 55B and the bead 55C.

In the formation of the bead 55A to 55E, ..., the building controller 13 moves the torch 17 toward the back side (in the direction perpendicular to the sheet) in the figure in accordance with the above-described program, and causes the vicinity of the target position of the bead formation to be heated by an arc that is generated in the atmosphere of a shielding gas G. Then, the filler metal Fm that has been melted by the heating is solidified at the target position to form a new bead. As a result, roughly-shaped bead layers shown in FIG. 7 are formed. A subsequent appropriate process finishes the additive manufacturing region 47 where the bead layers are formed, to a desired shape of the blade 27.

Here, a procedure for, when a program for driving the building unit 11 of the additively-manufactured object manufacturing apparatus 100 is to be produced based on the shape data of the additively-manufactured object 41, producing a bead map contributing to the production of the program, and steps of determining a bead forming sequence using the produced bead map will be described in detail.

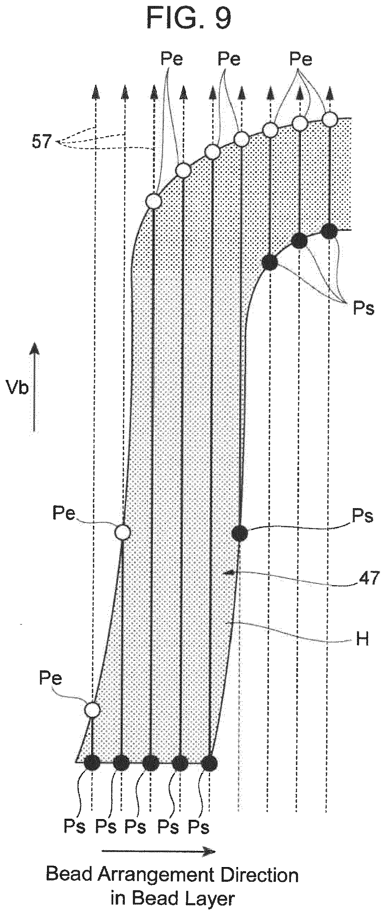

FIG. 9 is a step explanatory view schematically showing torch movement lines 57 extending along the bead forming direction Vb that is the reference direction, and the bead forming range in forming one virtual bead layer H in the additive manufacturing region 47.

In the case where a part of the virtual bead layer H is deviated from the reference direction as shown in FIG. 9, when beads are formed while moving the torch 17 shown in FIG. 1, the bead formation must be ON/OFF controlled. In each of the torch movement lines 57 shown in FIG. 9, namely, the bead formation is performed in the range between a position Ps where the torch 17 reaches the region of the virtual bead layer H, and a position Pe where the torch 17 escapes from the region of the virtual bead layer H, and not performed in the region other than the range.

When the bead formation is performed, a welding power is applied to the torch 17 and an arc is generated while the torch 17 is moved. When the bead formation is not to be performed, the application of the welding power to the torch 17 is stopped while the torch 17 is moved. The program producing unit 33 shown in FIG. 1 incorporates the operation procedure into the program. In this case, using a bead map in which the formation positions of beads are recorded leads to reduction of the computation load of the program production in the program producing unit 33.

Hereinafter, a procedure for producing a bead map will be described.

A bead map is used in the case where an additively-manufactured object is built by depositing beads using three-dimensional model data (shape data) indicating the shape of the additively-manufactured object, and includes position information for forming the beads. In the additive manufacturing, a bead map is obtained for each of layers that are acquired by layer slicing of the additively-manufactured object. In order to simplify the description, the description will be made by a simple model in which the additively-manufactured object is configured by a single virtual bead layer.

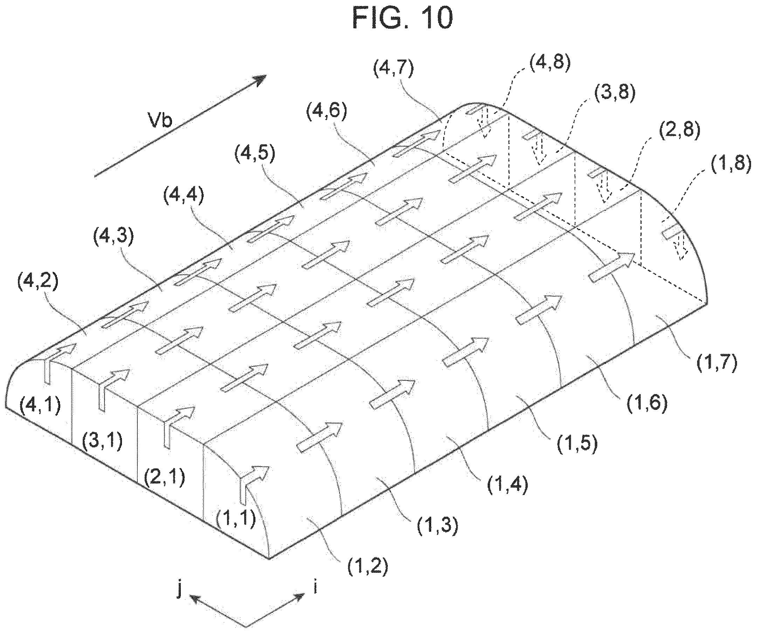

FIG. 10 is an explanatory view showing a manner of dividing the shape of the additively-manufactured object from three-dimensional model data of the additively-manufactured object, into a plurality of polygon faces. In this specification, "polygons" mean small polygon elements that form the surface of a three-dimensional member in three-dimensional computer graphics. Although, in the illustrated example, rectangular polygons are shown, triangular polygons may be used.

The model of an additively-manufactured object that is illustrated here has 8 polygon faces (indicated by an index i, and including end faces) along the welding direction that is the reference direction, and 4 polygon faces (indicated by an index j) along the direction perpendicular to the reference direction. The polygon faces of the model are indicated by (j, i) = (1, 1) to (4, 8) where i means the order of one of the faces that are arranged in the reference direction, and j indicates the column. Namely, in the column of j = 1, there are 8 polygon faces in total including polygon faces (1, 1), (1, 2), (1, 3), ..., (1, 7), and (1, 8). The total number of the polygon faces of one column is indicated by N (= 8). In the model, there are 4 columns of polygon faces in total, and the total number of the columns is indicated by M (= 4).

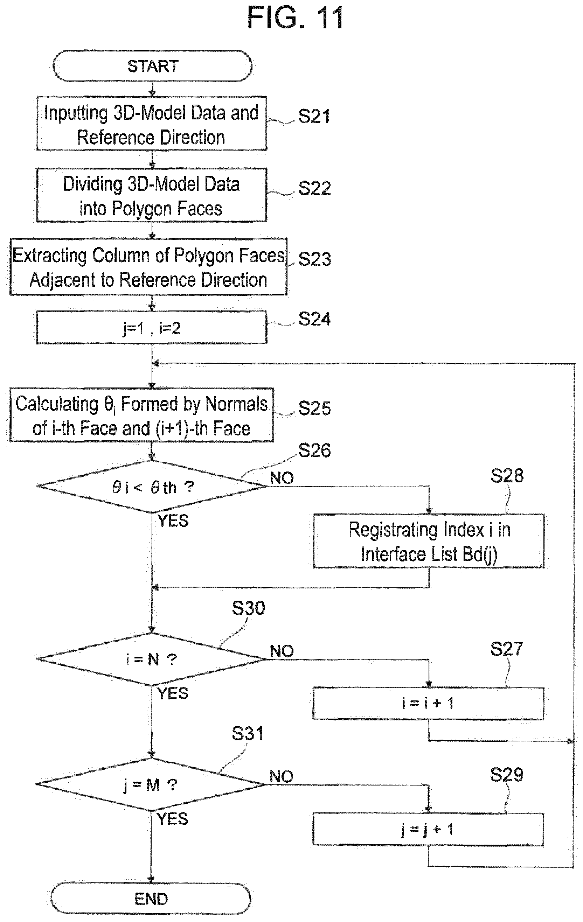

FIG. 11 is a flowchart showing a procedure of dividing three-dimensional model data into a plurality of polygon faces, and detecting a terminal face in which the bead formation is terminated after the bead formation is started, from the polygon faces. The steps of the procedure are performed for obtaining the position Pe shown in FIG. 9, and executed by the bead map producing unit 31 shown in FIG. 1.

First, three-dimensional model data indicating the shape of an additively-manufactured object, and the predetermined bead forming direction (reference direction) are input (S21).

Next, the input three-dimensional model data are divided into a number of polygon faces (S22). As shown in FIG. 10, namely, the outer surface of the additively-manufactured object is divided into a number of polygon faces that are expressed by using the indexes j and i.

Then, each column of polygon faces that are adjacent to each other in the reference direction is extracted (S23). Here, the polygon faces that are obtained by division are rectangular, and therefore a plurality of polygon faces that are connected in the reference direction are extracted as 4 columns in total.

Next, terminal polygon faces (1 to 4, 8) that are along the reference direction of the model shown in FIG. 10, i.e., polygon faces that correspond to the position Pe in FIG. 9 are detected.

First, the index j is set in step S24 to 1 (first column), and the index i is to 2 (second). In the j-th column (first column), an angle (intersection angle) θi (θ2) formed by the face normal of the i-th (second) polygon face, and the face normal of the (i+1)-th (third) polygon face is obtained in step S25. Here, since the fact that the index i = 1 is the index of the start polygon face along the reference direction of the model shown in FIG. 10 is known, the polygon face of i = 1 is eliminated from the detection object of the terminal polygon face.

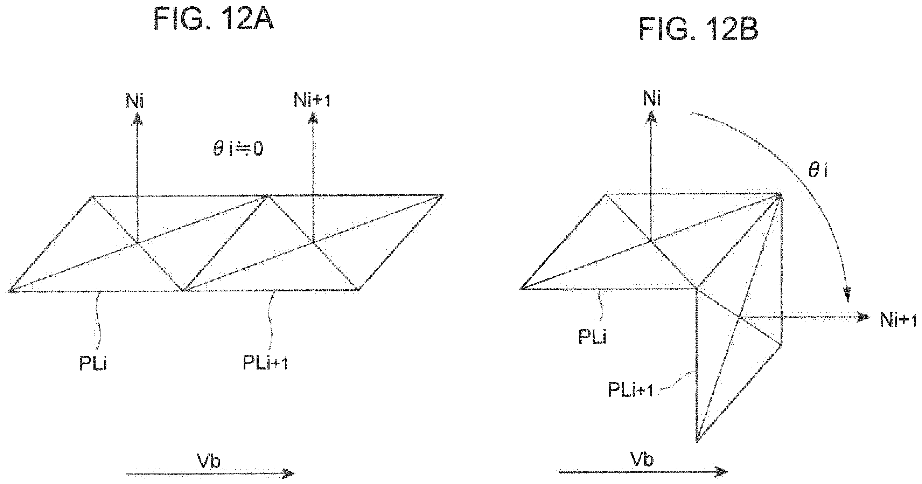

In the case of i = 2, as shown in FIG. 12A, it is determined whether the intersection angle θi formed by the face normal Ni of the first polygon face PLi, and the face normal Ni+1 of the second polygon face PLi+1 is smaller than a predetermined threshold θtb (θi < θth) or not (S26). If θi is smaller, the index i is incremented, until the index i becomes N (S27).

By contrast, if the intersection angle θi formed by the face normal Ni of the first polygon face PLi, and the face normal Ni+1 of the second polygon face PLi+1 is equal to or larger than the threshold θth (θi ≥ θth) as shown in FIG. 12B, the index i is registered in an interface list Bd(j) (S28). The polygon face (the i-th face counted from the start) corresponding to the index i at this time is the terminal polygon face.

The detection of the terminal polygon face, as described above for the column of j = 1, is performed on the all columns (M columns) (S29), and the indexes i of the terminal polygon faces are registered in the interface list Bd(j).

As a result of the above steps, the terminal polygon faces (in FIG. 1, the polygon faces (1 to 4, 8)) in the columns (j = 1 to M) are registered in the interface list Bd(j). Since the model that is used in the above has a simple shape, the same index i is registered for the columns. In a model of an actual additively-manufactured object, however, different indexes i may be registered for each column.

Next, a bead map in which flags for the plurality of columns of polygon faces indicating whether bead formation is to be performed in the face, or not is provided based on information of the above-described detected terminal polygon faces is produced.

Specifically, in polygon faces that are continuous in the reference direction (welding direction), among polygon faces ranging from the start polygon face to the terminal polygon face of a column of each face, a bead formation ON flag indicating that the bead formation is to be performed is provided to the faces other than the terminal polygon face, and a bead formation OFF flag indicating that the bead formation is not to be performed is provided to the terminal polygon face. The polygon faces to which the bead formation ON flag is provided are faces where a bead is to be formed at that position in the additive manufacturing, and the polygon faces to which the bead formation OFF flag is provided are faces where the bead formation is stopped at that position.

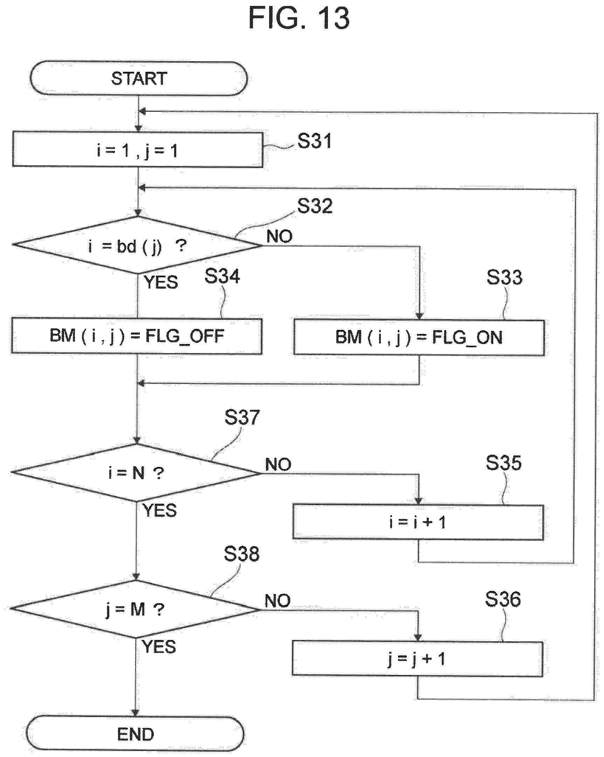

FIG. 13 is a flowchart showing a procedure of producing the bead map.

Here, the maximum values N and M of the indexes i and j of the all polygon faces (j, i) that are produced from the 3D model data, and information of the interface list Bd(j) (j = 1 to M) are used.

First, the indexes i and j are set to 1 (S31). In the first column (j = 1) of the polygon faces, it is determined, starting from the first face (i = 1), whether the index of the polygon face is coincident with the index number of the terminal polygon face registered in the interface list Bd(j) or not (S32). The determination is repeated until the polygon face in which the index i is the N-th index (S35), and further repeated until the index j indicates the M-th column (S36).

If, as a result of the determination, the polygon face is not coincident with the interface list Bd(j), the bead formation ON flag (FLG_ON) is registered in a bead map BM(j, i) (S33), and, if the coincidence is made, the bead formation OFF flag (FLG_OFF) is registered in the bead map BM(j, i) (S34).

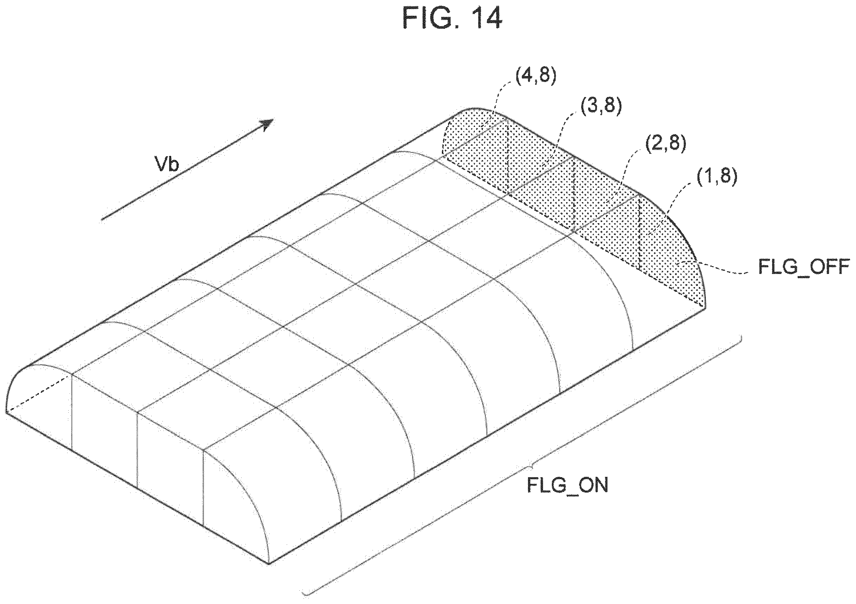

As a result, map data including the bead map BM(j, i) in which, as shown in FIG. 14, the bead formation OFF flag (FLG_OFF) is registered only in the terminal polygon faces (1 to 4, 8) of the polygon faces of the columns among the plurality of polygon faces (j, i), and the bead formation ON flag (FLG_ON) is registered in the other polygon faces, are obtained.

In the case where the bead map BM(j, i) is once obtained, it is possible to easily obtain positions where an arc is to be turned ON or OFF in the formation of a specific bead layer of the additively-manufactured object while the torch 17 for arc welding is moved in the reference direction (bead forming direction) Vb by the driving of the welding robot 19 shown in FIG. 1. When flags of polygon faces of the bead map are referred, namely, positions where an arc is to be turned ON or OFF can be automatically extracted.

As a specific reference procedure, the following procedure is exemplified.

The bead map BM(j, i) are data that are produced by making polygon faces indicating the shape of the additively-manufactured object correspond to the indexes j and i. Accordingly, the bead map BM(j, i) is converted to real space bead data RD of the real space coordinate system (real coordinate system) of the additively-manufactured object. With respect to the real space bead data RD that have been converted, in a number of polygon faces indicating the shape of the additively-manufactured object, the above-described flags registered in the respective polygon faces are set. To the surface of an additively-manufactured object in the real coordinate system, namely, the flag (FLG_ON or FLG_OFF) of a polygon face corresponding to the surface is allocated. The bead formation OFF flag (FLG_OFF) is registered in the real space bead data RD corresponding to positions (region where bead layers of the additively-manufactured object are not placed) other than the range of the bead map BM(j, i), because a bead is not formed.

Here, a case where, while moving the torch 17 in the reference direction Vb, a bead layer of an additively-manufactured object is formed by an arc generated from the torch 17 will be considered. In this case, an arc is generated from the torch 17 when the real space bead data RD corresponding to the tip position of the torch are changed as a result of the movement of the torch 17, from the bead formation OFF flag (FLG_OFF) to the bead formation ON flag (FLG_ON). The tip position of the torch at this time corresponds to the start end (position PS in FIG. 9) of the bead formation.

Then, the torch 17 is moved in the reference direction Vb while an arc is generated. During the movement, when the real space bead data RD corresponding to the tip position of the torch pass through the position of the OFF flag (FLG OFF), the generation of an arc is stopped. The tip position of the torch at this time corresponds to the terminal end (position Pe in FIG. 9) of the bead formation. That is, a bead continuous formation pass in which an arc is continuously generated along the reference direction, and the bead formation ON flag (FLG_ON) is continued is obtained.

By this control, as compared with a method in which the above-described start and terminal end positions of the bead formation along the reference direction are calculated one by one from the dimension information of 3D model data of an additively-manufactured object, thereby obtaining the arc generation start position and the arc stop position, a bead continuous formation pass of each column is obtained by simply referring to the real space bead data RD, and timings when bead formation is to be started and stopped can be easily determined. Therefore, steps of determining the bead formation procedure can be simplified.

The above-described arc driving operation is realized by executing a program by the control unit 37 for causing to instruct the driving of the building controller 13. Specifically, the control unit 37 shown in FIG. 1 sets the electric power to be applied from the power supply device 15 to the torch 17, while referring to the flags in the real space bead data RD. In the configuration, namely, a program indicating a procedure for forming beads for depositing an additively-manufactured object is not directly calculated from 3D model data, but determined using flags of the real space bead data RD that are obtained from a previously prepared bead map. In the configuration, therefore, steps of producing the program can be largely simplified. In the configuration, moreover, the above-described procedures for determining a bead forming sequence are determined by a program that is executed on a computer. By the execution of the program, a program for driving the building unit 11 to generate and move an arc can be easily produced.

The invention is not limited to the embodiment described above, and the combination of the configurations of the embodiment with each other or the modification or application by a person skilled in the art based on the statements in the description and well-known techniques are also expected in the invention, and are included in the claimed range.

Although, in the above-described example, the electric power to be applied to the torch for arc welding is set in accordance with the flags in the bead map, the control may be performed in a same manner also in the case of a heat source other than an arc. In the case where a laser is used as a heat source, for example, the output of the laser may be set in accordance with the flags, and, in the case where an electron beam is used as a heat source, the energy density of the electron beam of an electron gun may be set in accordance with the flags.

The bead forming direction in the case where an additively-manufactured object is additive manufactured is not limited to the horizontal direction, and may be set to a direction that is a vertical direction or a direction inclined from the horizontal direction. Moreover, the bead forming direction is not limited to be linear, and may be curved.

According to the program, the bead continuous formation pass is easily obtained by using flags provided to polygon faces, and, even with respect to any shape of an additively-manufactured object, the bead formation procedure can be efficiently determined. Therefore, a design of an additively-manufactured object can be simplified.

This application is based on Japanese Patent Application No. 2018-33877 filed on February 27, 2018.

### REFERENCE SIGNS LIST

- 11: building unit
- 13: building controller
- 15: power supply device
- 17: torch
- 31: bead map producing unit
- 33: program producing unit
- 35: storage unit
- 37: control unit
- 41: additively-manufactured object
- 55A to 55E: bead
- 100: additively-manufactured object manufacturing apparatus
- Fm: filler metal

## Claims

1. A method for depositing an additively-manufactured object (41) in which, using three-dimensional shape data indicating a shape of the additively-manufactured object (41), the additively-manufactured object (41) is formed by beads (55A-55E) obtained by melting and solidifying a filler metal (Fm), the method comprising:
dividing the shape of the additively-manufactured object (41) of the three-dimensional shape data, into a plurality of polygon faces;
extracting a column of the plurality of polygon faces along a predetermined specific direction, and sequentially providing index numbers along the specific direction, starting from a start polygon face at one end of the extracted column;
detecting a terminal polygon face at another end of the column based on directions of a pair of adjacent polygon faces in the column;
providing, among a plurality of polygon faces ranging from the start polygon face to the terminal polygon face in the column, a bead formation ON flag to polygon faces other than the terminal polygon face, and a bead formation OFF flag to the terminal polygon face;
producing a bead map of all polygon faces in which the index numbers and the flags provided to the polygon faces are associated with one another;
referring to the bead map to obtain, for all of the columns, a bead continuous formation pass in a case where bead formation in which a bead is continuously formed along the specific direction for each of the columns is executed at positions corresponding to the polygon faces having the bead formation ON flag, and stopped at a position where the bead formation reaches the polygon face having the bead formation OFF flag from the bead formation ON flag; and
continuously forming, sequentially from one of the plurality of columns, the bead along the bead continuous formation pass obtained for the column, thereby depositing the additively-manufactured object (41).

2. The method for depositing an additively-manufactured object (41) according to claim 1, wherein the specific direction is a longitudinal direction of the additively-manufactured object (41).

3. An apparatus for manufacturing an additively-manufactured object (41), comprising:
a control unit (37) configured to obtain the bead continuous formation pass for each of the columns, by the method for depositing an additively-manufactured object (41) according to claim 1 or 2; and
a building unit (11) configured to continuously form, starting sequentially from one of the plurality of columns, the bead along the bead continuous formation pass of the column.

4. The apparatus for manufacturing an additively-manufactured object (41) according to claim 3, wherein the building unit (11) includes a torch (17) for arc welding, and an electric power to be applied to the torch (17) for arc welding is differentiated between the polygon faces having the bead formation ON flag, and the polygon face having the bead formation OFF flag.

5. A program for causing a computer to execute a determination of a bead depositing sequence when an additively-manufactured object (41) is formed using three-dimensional shape data indicating a shape of the additively-manufactured object (41), by beads (55A-55E) obtained by melting and solidifying a filler metal (Fm), wherein the program causes the computer to execute process, the process comprising:
dividing the shape of the additively-manufactured object (41) of the three-dimensional shape data, into a plurality of polygon faces;
extracting a column of the plurality of polygon faces along a predetermined specific direction, and sequentially providing index numbers along the specific direction, starting from a start polygon face at one end of the extracted column;
detecting a terminal polygon face at another end of the column based on directions of a pair of adjacent polygon faces in the column;
providing, among a plurality of polygon faces ranging from the start polygon face to the terminal polygon face in the column, a bead formation ON flag to polygon faces other than the terminal polygon face, and a bead formation OFF flag to the terminal polygon face;
producing a bead map of all polygon faces in which the index numbers and the flags provided to the polygon faces are associated with one another;
referring to the bead map to obtain, for all of the columns, a bead continuous formation pass in a case where bead formation in which a bead is continuously formed along the specific direction for each of the columns is executed at positions corresponding to the polygon faces having the bead formation ON flag, and stopped at a position where the bead formation reaches the polygon face having the bead formation OFF flag from the bead formation ON flag; and
continuously forming, sequentially from one of the plurality of columns, the bead along the bead continuous formation pass obtained for the column, thereby depositing the additively-manufactured object (41), by the apparatus according to claim 3.

## Patentansprüche

1. Ein Verfahren zum Abscheiden bzw. Ablagern eines additiv hergestellten Objekts (41), bei dem unter Verwendung dreidimensionaler Formdaten, die eine Form des additiv hergestellten Objekts (41) angeben, das additiv hergestellte Objekt (41) durch Material-Stränge bzw. -Raupen bzw. -Wülste *(beads)* (55A-55E) gebildet wird, die durch Schmelzen und Erstarren eines Fülldrahts (Fm) erhalten werden, wobei das Verfahren Folgendes umfasst:
Aufteilen der Form des additiv hergestellten Objekts (41) der dreidimensionalen Formdaten in eine Vielzahl von Polygonflächen;
Extrahieren einer Säule der Vielzahl von Polygonflächen entlang einer vorbestimmten spezifischen Richtung, und sequentielles Bereitstellen von Indexnummern entlang der spezifischen Richtung, beginnend von einer Start-Polygonfläche an einem Ende der extrahierten Säule;
Erfassen einer End-Polygonfläche an einem anderen Ende der Säule basierend auf Richtungen eines Paars benachbarter Polygonflächen in der Säule;
Bereitstellen, unter eine Vielzahl von Polygonflächen, die von der Start-Polygonfläche bis zur End-Polygonfläche in der Säule reichen, einer Wulstbildungs-EIN-Markierung für Polygonflächen, die sich von der End-Polygonfläche unterscheiden, und einer Wulstbildungs-AUS-Markierung für die End-Polygonfläche;
Erzeugen einer Wulstkarte aller Polygonflächen, in der die Indexnummern und die für die Polygonflächen bereitgestellten Markierungen einander zugeordnet sind;
Bezugnehmen auf die Wulstkarte, um für alle Säulen einen kontinuierlichen Wulstbildungsdurchlauf bzw. eine kontinuierliche Wulstbildungsspur *(bead continous formation pass)* zu erhalten, in einem Fall, in dem eine Wulstbildung, bei der ein Wulst kontinuierlich entlang der spezifischen Richtung für jede der Säulen gebildet wird, an Positionen ausgeführt wird, die den Polygonflächen mit der Wulstbildungs-EIN-Markierung entsprechen, und an einer Position angehalten wird, an der die Wulstbildung die Polygonfläche mit der Wulstbildungs-AUS-Markierung ausgehend von der Wulstbildungs-EIN-Markierung erreicht; und
kontinuierliches Bilden des Wulstes, sequentiell aus einer der Vielzahl von Säulen, entlang der kontinuierlichen Wulstbildungsspur, der für die Säule erhalten wird, wodurch das additiv hergestellte Objekt (41) abgelagert wird.

2. Das Verfahren zum Ablagern eines additiv hergestellten Objekts (41) nach Anspruch 1, wobei die spezifische Richtung eine Längsrichtung des additiv hergestellten Objekts (41) ist.

3. Eine Vorrichtung zur Herstellung eines additiv hergestellten Objekts (41), Folgendes umfassend:
eine Steuereinheit (37), die konfiguriert ist, um den kontinuierlichen Wulstbildungsdurchlauf für jede der Säulen durch das Verfahren zum Ablagern eines additiv hergestellten Objekts (41) gemäß Anspruch 1 oder 2 zu erhalten; und
eine Baueinheit (11), die konfiguriert ist, um den Wulst entlang der kontinuierlichen Wulstbildungsspur der Säule kontinuierlich zu bilden, wobei sie sequentiell bei einer der Vielzahl von Säulen beginnt.

4. Die Vorrichtung zur Herstellung eines additiv hergestellten Objekts (41) nach Anspruch 3, wobei die Baueinheit (11) einen Brenner (17) zum Lichtbogenschweißen umfasst, und wobei eine elektrische Energie, die zum Lichtbogenschweißen an den Brenner (17) angelegt wird, zwischen den Polygonflächen mit der Wulstbildungs-EIN-Markierung und der Polygonfläche mit der Wulstbildungs-AUS-Markierung differenziert wird.

5. Ein Programm, das einen Computer dazu veranlasst, eine Bestimmung einer Wulstablagerungssequenz auszuführen, wenn ein additiv hergestelltes Objekt (41) unter Verwendung von dreidimensionalen Formdaten, die eine Form des additiv hergestellten Objekts (41) angeben, durch Wülste (55A-55E) gebildet wird, die durch Schmelzen und Verfestigen eines Füllmetalls (Fm) erhalten werden, wobei das Programm den Computer dazu veranlasst, einen Prozess auszuführen, wobei der Prozess Folgendes umfasst:
Aufteilen der Form des additiv hergestellten Objekts (41) der dreidimensionalen Formdaten in eine Vielzahl von Polygonflächen;
Extrahieren einer Säule der Vielzahl von Polygonflächen entlang einer vorbestimmten spezifischen Richtung, und sequentielles Bereitstellen von Indexnummern entlang der spezifischen Richtung, beginnend von einer Start-Polygonfläche an einem Ende der extrahierten Säule;
Erfassen einer End-Polygonfläche an einem anderen Ende der Säule basierend auf Richtungen eines Paars benachbarter Polygonflächen in der Säule;
Bereitstellen, unter einer Vielzahl von Polygonflächen, die von der Start-Polygonfläche bis zur End-Polygonfläche in der Säule reichen, einer Wulstbildungs-EIN-Markierung für Polygonflächen, die sich von der End-Polygonfläche unterscheiden, und einer Wulstbildungs-AUS-Markierung für die End-Polygonfläche;
Erzeugen einer Wulstkarte aller Polygonflächen, in der die Indexnummern und die für die Polygonflächen bereitgestellten Markierungen einander zugeordnet sind;
Bezugnehmen auf die Wulstkarte, um für alle Säulen einen kontinuierlichen Wulstbildungsdurchlauf bzw. eine kontinuierliche Wulstbildungsspur *(bead continous formation pass)* zu erhalten, in einem Fall, in dem eine Wulstbildung, bei der ein Wulst kontinuierlich entlang der spezifischen Richtung für jede der Säulen gebildet wird, an Positionen ausgeführt wird, die den Polygonflächen mit der Wulstbildungs-EIN-Markierung entsprechen, und an einer Position angehalten wird, an der die Wulstbildung die Polygonfläche mit der Wulstbildungs-AUS-Markierung ausgehend von der Wulstbildungs-EIN-Markierung erreicht; und
kontinuierliches Bilden des Wulstes, sequentiell aus einer der Vielzahl von Säulen, entlang der kontinuierlichen Wulstbildungsspur, der für die Säule erhalten wird, wodurch das additiv hergestellte Objekt (41) durch die Vorrichtung nach Anspruch 3 abgelagert wird.

## Revendications

1. Un procédé de dépôt d'un objet fabriqué par addition (41) dans lequel, à l'aide de données de forme tridimensionnelles indiquant une forme de l'objet fabriqué par addition (41), l'objet fabriqué par addition (41) est formé par des perles ou de bourrelets (beads) (55A-55E) obtenus par fusion et solidification d'un métal d'apport (Fm), le procédé comprenant le fait de :
diviser la forme de l'objet fabriqué par addition (41) des données de forme tridimensionnelle, en une pluralité de faces de polygone ;
extraire une colonne de la pluralité de faces de polygone le long d'une direction spécifique prédéterminée, et fournir séquentiellement des numéros d'index le long de la direction spécifique, en commençant par une face de polygone de départ à une extrémité de la colonne extraite ;
détecter une face de polygone terminale à une autre extrémité de la colonne sur la base des directions d'une paire de faces de polygone adjacentes dans la colonne ;
fournir, parmi une pluralité de faces de polygone allant de la face de polygone de départ à la face de polygone terminale dans la colonne, un drapeau ou encore indicateur *(flag)* ON de formation de bourrelet aux faces de polygone autres que la face de polygone terminale, et un indicateur OFF de formation de bourrelet à la face de polygone terminale ;
produire une carte de bourrelets de toutes les faces de polygone dans laquelle les numéros d'index et les indicateurs fournis aux faces de polygone sont associés l'un à l'autre ;
se référer à la carte de bourrelets pour obtenir, pour toutes les colonnes, un passage ou encore un parcours (pass) de formation continue de bourrelet dans le cas où la formation de bourrelet, dans laquelle un bourrelet est formé en continu le long de la direction spécifique pour chacune des colonnes, est exécutée à des positions correspondant aux faces de polygone présentant l'indicateur ON de formation de bourrelet, et arrêtée à une position où la formation de bourrelet atteint la face de polygone présentant l'indicateur OFF de formation de bourrelet à partir de l'indicateur ON de formation de bourrelet ; et de
former en continu, séquentiellement à partir de l'une de la pluralité de colonnes, le bourrelet le long du parcours de formation continue de bourrelet obtenu pour la colonne, déposant ainsi l'objet fabriqué par addition (41).

2. Le procédé pour déposer un objet fabriqué par addition (41) d'après la revendication 1, sachant que la direction spécifique est une direction longitudinale de l'objet fabriqué par addition (41).

3. Un appareil de fabrication d'un objet fabriqué par addition (41), comprenant :
une unité de commande (37) configurée pour obtenir le parcours de formation continue de bourrelet pour chacune des colonnes, par le procédé de dépôt d'un objet fabriqué par addition (41) d'après la revendication 1 ou 2 ; et
une unité de construction (11) configurée pour former en continu, en partant séquentiellement de l'une de la pluralité de colonnes, le bourrelet le long du parcours de formation continue de bourrelet de la colonne.

4. L'appareil de fabrication d'un objet fabriqué par addition (41) d'après la revendication 3, sachant que l'unité de construction (11) inclut une torche (17) pour le soudage à l'arc, et qu'une énergie électrique à appliquer à la torche (17) pour le soudage à l'arc est différenciée entre les faces de polygone présentant l'indicateur ON de formation de bourrelet, et la face de polygone présentant l'indicateur OFF de formation de bourrelet.

5. Un programme pour amener un ordinateur à exécuter une détermination d'une séquence de dépôt de bourrelet lorsqu'un objet fabriqué par addition (41) est formé à l'aide de données de forme tridimensionnelle indiquant une forme de l'objet fabriqué par addition (41), par des bourrelets (55A-55E) obtenus par fusion et solidification d'un métal d'apport (Fm), sachant que le programme amène l'ordinateur à exécuter le processus, le processus comprenant le fait de :
diviser la forme de l'objet fabriqué par addition (41) des données de forme tridimensionnelles, en une pluralité de faces de polygone ;
extraire une colonne de la pluralité de faces de polygone le long d'une direction spécifique prédéterminée, et fournir séquentiellement des numéros d'index le long de la direction spécifique, en commençant par une face de polygone de départ à une extrémité de la colonne extraite ;
détecter une face de polygone terminale à une autre extrémité de la colonne sur la base des directions d'une paire de faces de polygone adjacentes dans la colonne ;
fournir, parmi une pluralité de faces de polygone allant de la face de polygone de départ à la face de polygone terminale dans la colonne, un drapeau ou encore indicateur *(flag)* ON de formation de bourrelet aux faces de polygone autres que la face de polygone terminale, et un indicateur OFF de formation de bourrelet à la face de polygone terminale ;
produire une carte de bourrelets de toutes les faces de polygone dans laquelle les numéros d'index et les indicateurs fournis aux faces de polygone sont associés l'un à l'autre ;
se référer à la carte de bourrelets pour obtenir, pour toutes les colonnes, un passage ou encore un parcours (pass) de formation continue de bourrelet dans le cas où la formation de bourrelet, dans laquelle un bourrelet est formé en continu le long de la direction spécifique pour chacune des colonnes, est exécutée à des positions correspondant aux faces de polygone présentant l'indicateur ON de formation de bourrelet, et arrêtée à une position où la formation de bourrelet atteint la face de polygone présentant l'indicateur OFF de formation de bourrelet à partir de l'indicateur ON de formation de bourrelet ; et de
former en continu, séquentiellement à partir de l'une de la pluralité de colonnes, le bourrelet le long du parcours de formation continue de bourrelet obtenu pour la colonne, déposant ainsi l'objet fabriqué par addition (41) par l'appareil d'après la revendication 3.
